# EUROPÄISCHE PATENTSCHRIFT

(11) **EP 1 597 121 B1**
(45) Veröffentlichungstag und Bekanntmachung des Hinweises auf die Patenterteilung: **23.06.2010**
(21) Anmeldenummer: 04713000.0
(22) Anmeldetag: 20.02.2004
(51) Int. Cl.: B60S 1/38

(54) **VERFAHREN ZUM HERSTELLEN EINES WISCHBLATTS SOWIE VORRICHTUNG ZUR DURCHFÜHRUNG DES VERFAHRENS UND DANACH HERGESTELLTES WISCHBLATT**
METHOD FOR PRODUCING A WIPER BLADE, DEVICE FOR CARRYING OUT SAID METHOD AND WIPER BLADE PRODUCED ACCORDING TO SAID METHOD
PROCEDE ET DISPOSITIF DE PRODUCTION D'UN ESSUIE-GLACE ET ESSUIE-GLACE AINSI OBTENU

(30) Priorität: 21.02.2003 DE 10307697; 01.08.2003 DE 10335396
(43) Veröffentlichungstag der Anmeldung: 23.11.2005
(73) Patentinhaber: ROBERT BOSCH GMBH, 70442 Stuttgart (DE)
(72) Erfinder: THOMAR, Wolfgang, 3300 Tienen (BE); HAEFELE, Klaus-Dieter, 3300 Tienen (BE); CRABBE, Rudi, 3350 Linter (BE)
(86) Internationale Anmeldenummer: PCT/DE2004/000319
(87) Internationale Veröffentlichungsnummer: WO 2004/076252

(56) Entgegenhaltungen:
- WO-A-02/087935
- DE-B- 1 205 856
- DE-C- 19 629 314
- FR-A- 2 603 850
- US-A1- 2002 133 897
- US-A1- 2003 159 229

## Beschreibung

### Stand der Technik

Bei Wischblättern mit einem federbandartigen Tragelement soll dieses über das gesamte vom Wischblatt bestrichene Wischfeld eine möglichst gleichmäßige Verteilung des vom Wischerarm ausgehenden Wischblatts-Anpressdrucks an der Scheibe gewährleisten. Durch eine entsprechende vorgebende Krümmung des unbelasteten Tragelements - also wenn das Wischblatt nur mit seinen beiden Enden an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung, weil während des Wischbetriebs die Wischleiste, bzw. deren an der Scheibe anliegende Wischlippe, stets mit einer bestimmten Kraft gegen die Scheibe drücken muss. Das Tragelement ersetzt somit die aufwendige Tragbügelkonstruktion mit zwei in der Wischleiste angeordneten Federschienen, wie sie bei herkömmlichen Wischblättern praktiziert wird (DE-OS 15 05 397), weil das Tragelement neben der Verteilung des Anpressdrucks auch die notwendige Querversteifung der gummielastischen Wischleiste bewirkt. Bei dem bekannten Wischblatt wird nämlich die von einem Wischerarm auf einen Hauptbügel ausgeübte, zur Scheibe gerichtete Auflagekraft auf zwei Krallenbügel übertragen und von diesen über vier Krallen auf die gummielastische Wischleiste verteilt. Die beiden Federschienen dieses Wischblatts sorgen in erster Linie für eine Querversteifung der Wischleiste zwischen den Krallen, wenn das Wischblatt quer zu seiner Längserstreckung über die Scheibe verschoben wird.

Aus der DE 101 20 467 A1 ist es bekannt das Tragelement zusätzlich mit einer Windabweisleiste zu versehen, die während der Fahrt den Anpressdruck gleichmäßig über die Länge des Wischblatts verteilt und in Abhängigkeit der Fahrgeschwindigkeit erhöht. Diese Windabweisleiste soll entweder aufgerastet oder in Längsrichtung aufgeschoben werden. Da die Windabweisleiste jedoch systembedingt ein weiches Teil sein muss, um die eingangs erwähnte Druckverteilung auf Grund einer Verbiegung des vorgebogenen Tragelements nicht zu behindern, gestaltet sich die Montage insbesondere in der Serienfertigung äußerst kompliziert und störungsanfällig. Insbesondere der genaue Sitz der Windabweisleiste auf dem Tragelement entlang der gesamten Länge des Wischblatts ist nur schwer erreichbar.

Das Dokument US-A-2002/0133897 offenbart ein Wischblatt das eine Windabweisleiste aufweist, die auf die Wischleiste eingeschoben wird.

Im Dokument FR-A-2603850 ist ein Wischblatt offenbart das eine Windabweisleiste aufweist die auf der Wischleiste mittels der Haltekragen befestigt wird.

### Vorteile der Erfindung

Das erfindungsgemäße Verfahren mit den Merkmalen des Hauptanspruchs hat den Vorteil, dass durch das Aufteilen des Fügevorgangs in einzelne Verfahrensschritte gerade das Umgreifen der zur Windabweisleiste gehörenden Krallen kontrolliert gestartet, vollzogen und überprüft werden kann. Erst wenn mindestens eine der an der Windabweisleiste angeformte Krallen korrekt am Tragelement eingefädelt ist, wird die gesamte restliche Windabweisleiste über das Tragelement gestülpt. Dies funktioniert dann, wenn der Grundkörper des Wischblatts exakt in einer Haltevorrichtung positioniert ist wobei zumindest bereichsweise ein Abstand zwischen dem Tragelement und der Haltevorrichtung verbleibt. In diesen Abstand lässt sich die Kralle einbringen und auf einfache Weise relativ zum Tragelement justieren. Während des Überstülpvorgangs ist die Kralle dann innerhalb des Abstands geführt beziehungsweise gehalten.

Durch die in den Unteransprüchen aufgeführten Merkmale sind vorteilhafte Weiterbildungen des Verfahrens nach dem Hauptanspruch möglich. So ist es insbesondere von Vorteil, wenn die Wischleiste seitlich an einer ersten Seite des Tragelements eingefädelt, über eine Quererstreckung des Grundkörpers geführt und seitlich über eine, der ersten Seite gegenüberliegenden zweite Seite gestülpt wird, da dabei bereits beim Einfädeln die erste Kralle exakt positioniert und dort gehalten wird, solange, bis auch die zweite Kralle auf der gegenüberliegenden Seite vollständig das Tragelement umgriffen hat.

Es hat sich gezeigt, dass das Einfädeln der ersten Kralle dann besonders einfach und prozessfreundlich verläuft, wenn die Windabweisleiste relativ zum Tragelement bzw. Relativ zu einer durch das Tragelement definierten Ebene geneigt ist. Die einzufädelnde Kralle wird dadurch ungestört durch die andere Kralle auf die Tragelementseite zugeführt, die sie umgreifen soll. Dabei kann die Kralle selbsttätig ausgerichtet werden - das heißt, dass die Krallenöffnung direkt auf das Tragelement zuweist und der Verlauf der Krallenöffnung dem der Tragelementseite entlang der Ebene entspricht -, wenn die Kralle an der Haltevorrichtung angelegt und in den Abstand eingeführt wird. Durch die Elastizität der Windabweisleiste legt sich die Kralle mit einer Unterkante an der Haltevorrichtung an und lässt sich derart ausgerichtet einfach über die Tragelementseite schieben.

In vorteilhafter Weise hintergreift die zweite Kralle beim Überstülpen der Wischleiste die zweite Seite des Tragelements und sichert so die Windabweisleiste zumindest quer zur Längsrichtung des Wischblatts. Dieser Schritt kann auf einfache Weise durch eine Klippsleiste vollzogen werden, die auf einen Flügelbereich der Windabweisleiste drückt, wodurch die zweite Kralle um die zweite Seite herum geschoben wird. Weist die Klippsleiste die gesamte Länge der Windabweisleiste auf, so kann die Windabweisleiste oder zumindest die gesamte Länge eines Teilbereichs der Windabweisleiste auf, so kann die Windabweisleiste beziehungsweise der Teilbereich der Windabweisleiste durch einen einmaligen Drückvorgang der Klippsleiste über das Tragelement gestülpt werden. Auf diese Weise wird dieser Einzelschritt sehr schnell durchgeführt, was für die Serienfertigung großer Stückzahlen von Vorteil ist. Etwas langsamer aber dafür prozesssicher wird die zweite Kralle über die zweite Seite geschoben, wenn zum Überstülpen eine Rolle auf einen Bereich der Windabweisleiste drückt und die Rolle entlang der zweiten Seite verfährt. Dabei wird beim Anfahren der Rolle die zweite Kralle um die zweite Seite des Tragelements herum angefädelt und durch Längsverfahren der Rolle in einer Art Wellenbewegungen die zweite Kralle über die zweite Seite geschoben.

Das Einfädeln der ersten Kralle wird verbessert, wenn während des Einfädelns die Druckrolle als Führung dient. Dadurch ist sichergestellt, dass die weiche Windabweisleiste sicher gehalten und der Einfädelvorgang ordnungsgemäß durchgeführt wird. Eine weitere Führung kann sich dadurch erübrigen.

Die Prozesssicherheit wird erhöht, wenn die Windabweisleiste selbst in einer Vertiefung der Haltevorrichtung zwischengelagert wird, die der Neigung der Wischleiste gegenüber der Ebene des Tragelements während der Zuführung entspricht. Dadurch ist sichergestellt, dass die weiche Windabweisleiste ordnungsgemäß gegriffen werden kann und in der vorbestimmten Neigung montiert wird.

Um vollständig sicherzustellen, dass die zweite Kralle ordnungsgemäß über die zweite Seite des Tragelements gelangt, kann diese gegriffen und definiert geführt werden. Hierfür eignet sich eine Hakenleiste, die mit einem Haken, der zumindest bereichsweise an der zweiten Kralle einhakt, die Windabweisleiste insgesamt in ihrer Breite dehnt, die zweite Kralle damit über die zweite Seite zieht und die zweite Kralle nach unten um das Tragelement führt.

Insbesondere bei kurzen Wischblättern ist es von Vorteil, wenn nach dem Einfädeln der ersten Kralle an einer Stirnseite des Tragelements die Wischleiste entlang des Wischblatts über das Tragelement gestülpt wird. Bei diesem Verfahren kann die Windabweisleiste maschinell entlang der Längsrichtung des Wischblatts positioniert werden und muss dann lediglich an einer Stelle gegriffen, eingefädelt und übergestülpt werden. Dieser Prozessschritt eignet sich insbesondere bei weichen, schwer greifbaren Windabweisleisten, da während des Überstülpens immer eine effektive Führung vorhanden ist.

Die Prozessgeschwindigkeit kann erhöht beziehungsweise der Prozesstakt erniedrigt werden, wenn die Windabweisleiste entlang ihrer Längserstreckung zweiteilig ausgebildet ist und die beiden Teile gleichzeitig auf unterschiedlichen Bereichen des Tragelements aufgebracht werden. Diese Maßnahme eignet sich besonders bei Wischblättern, bei denen bereits eine Anschlussvorrichtung für einen Wischerarm montiert ist und die Windabweisleiste beidseitig der Anschlussvorrichtung aufgebracht werden muss.

Eine Vorrichtung zur Durchführung des Verfahrens weist zumindest eine Haltevorrichtung für den Grundkörper des Wischblatts sowie eine Greifvorrichtung für die Windabweisleiste auf wobei an der Haltevorrichtung in vorteilhafter Weise ein einen Abstand definierenden Absatz angeformt ist. Durch den Absatz wird es möglich, dass die Windabweisleiste beziehungsweise deren Krallen je einzeln oder gemeinsam geführt das Tragelement umgreifen können, wodurch die Prozesssicherheit deutlich erhöht wird.

Das Wischblatt beziehungsweise dessen Grundkörper lässt sich einfach in der Haltevorrichtung positionieren und sichern, wenn das Wischblatt an einer am Wischblatt ausgebildeten Anschlussvorrichtung für einen Wischerarm aufgenommen wird. Dabei kann die Vorspannung des Tragelements ausgenutzt werden, wenn die Haltevorrichtung selbst eben ausgebildet ist und das Tragelement auf diese Ebene belastet und über die Anschlussvorrichtung fixiert wird. Mittels einer Anpressleiste, die quer zu einer Längserstreckung des Wischblatts verschiebbar ist kann eine einfachere zusätzliche Fixierung der teilweise montierten Windabweisleiste erreicht werden.

### Zeichnung

### In der Zeichnung zeigen

Fig. 1 ein nach dem erfindungsgemäßen Verfahren hergestelltes Wischblatt in perspektivischer Darstellung mit strichpunktierte angedeutetem Wischerarm,
Fig. 2 einen Querschnitt durch das Wischblatt entlang der Linie II-III in Fig. 1 in vergrößerter Darstellung,
Fig. 3 die Anordnung gemäß Fig. 2 in einer anderen Ausführungsform des erfindungsgemäßen Wischblatts, die
Fig. 4a bis 4g einzelne Verfahrensschritte nach einem ersten erfindungsgemäßen Verfahrensbeispiel,
Fig. 5 ein zweites Verfahrensbeispiel, die
Fig. 6a bis 6d einzelne Verfahrensschritte nach einem dritten Verfahrensbeispiel,
Fig. 7 ein viertes Verfahrensbeispiel und
Fig. 8 ein Ausführungsbeispiel für eine erfindungsgemäße Vorrichtung.

### Beschreibung der Ausführungsbeispiele

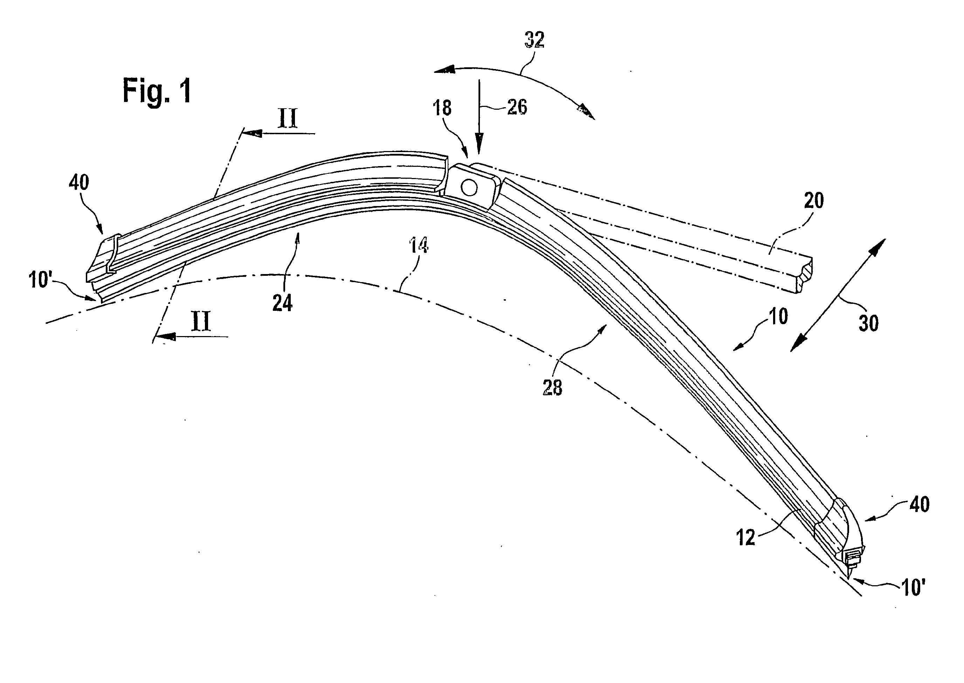

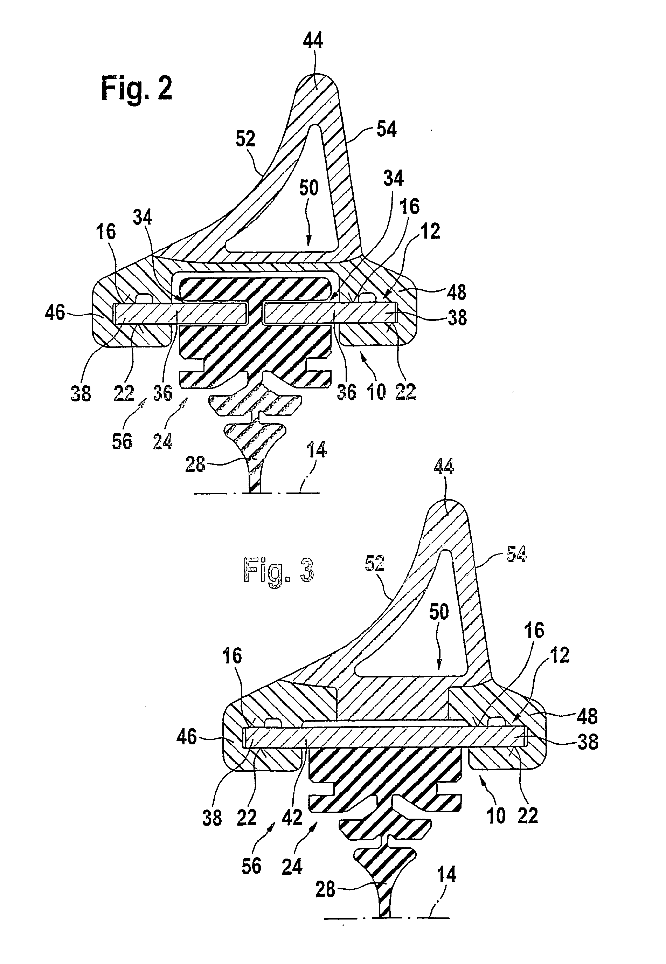

Ein in Fig. 1 dargestelltes Wischblatt 10 weist ein bandartig langgestrecktes, federelastisches, ein- oder mehrteiliges Tragelement 12 auf, welches in unbelastetem Zustand in Längsrichtung gekrümmt ist. An der von der zu wischenden Scheibe 14 abgewandten konvexen oberen bzw. äußeren Bandseite 16 (Figuren 1 und 2) des Tragelements ist in dessen Mittelabschnitt eine beispielsweise flächig an dieser anliegenden Anschlussvorrichtung 18 angeordnet, mit deren Hilfe das Wischblatt 10 mit einem an der Karosserie eines Kraftfahrzeugs geführten, angetriebenen Wischerarm 20 lösbar verbunden werden kann. An der der Scheibe zugewandten konkaven unteren bzw. inneren Bandfläche oder Bandseite 22 des gekrümmten Tragelements 12 ist eine langgestreckte, gummielastische Wischleiste 24 angeordnet, die sich längsachsparallel zum Tragelement 12 erstreckt. An dem freien Ende des Wischerarms sind nicht näher dargestellte Gegenanschlussmittel vorgesehen, welche mit der Anschlussvorrichtung 18 des Wischblatts im Sinne eines Gelenks zusammenwirken.

Der Wischerarm 20 und damit auch das Wischblatt 10 sind in Richtung des Pfeiles 26 zur zu wischenden Scheibe belastet, deren zu wischende Oberfläche in Fig. 1 durch die strichpunktierte Linie 14 angedeutet ist. Da die strichpunktierte Linie die stärkste Krümmung der Scheibenoberfläche darstellen soll, ist klar ersichtlich, dass die Krümmung des mit seinen Enden 10' an der Scheibe 14 anliegenden, noch unbelasteten Wischblatts 10 stärker ist als die maximale Scheibenkrümmung. Es hat - unbelastet - also gegenüber der Scheibe einen konkaven Verlauf. Unter dem Anpressdruck (Pfeil 26) legt sich das Wischblatt 10 mit seiner die Wischarbeit verrichtende Wischlippe 28 über seine gesamte Länge an der Scheibenoberfläche 14 an und geht in eine der Strecklage angenäherte Arbeitslage über. Dabei baut sich im bandartigen federelastischen Tragelement 12 eine Spannung auf, welche für eine ordnungsgemäße Anlage der Wischleiste 24 bzw. deren Wischlippe 28 über deren gesamte Länge an der Wischleiste 24 bzw. deren Wischlippe 28 über deren gesamte Länge an der Kraftfahrzeugscheibe 14 sorgt. Weil die in aller Regel sphärisch gekrümmte Scheibe nicht einen Abschnitt einer Kugeloberfläche darstellt, muss sich das Wischblatt 10 gegenüber dem Wischerarm 20 während seiner Wischbewegung (Doppelpfeil 50) ständig der jeweiligen Lage und dem Verlauf der Scheibenoberfläche 14 anpassen können. Deshalb ist die eine Schwingbewegung (Doppelpfeil 32) um die Gelenkachse der Anschlussverbindung ermöglichende gelenkige Verbindung zwischen Wischerarm 20 und Wischblatt 10 notwendig.

Die Ausführungsform gemäß Fig. 2 des Wischblatts 10 hat eine Wischleiste 24, die an ihren beiden aneinander gegenüberliegenden, voneinander abgewandten Längsseiten mit je einer einander gegenüberliegenden Längsnuten 34 versehen ist, die zu den Längsseiten hin randoffen sind. In den Längsnuten 34 ist jeweils eine Federschiene 36 angeordnet, deren Breite größer ist als die Tiefe der Längsnuten 34. Die beiden Federschienen 36 gehören zum Tragelement 12. Sie ragen jeweils mit ihren äußeren Längs-Randbereichen bzw. Randstreifen 38 aus den Längsnuten 34 heraus. Die ordnungsgemäße Sicherung der beiden Federschienen 336 in ihren Längsnuten 34 wird durch Endkappen 40 übernommen (Fig. 1). Des Weiteren kann auch die Anschlussvorrichtung 18 (Fig. 1) zur Sicherung der Federschienen 36 in ihren Längsnuten 34 beitragen.

Die Ausführungsform nach Fig. 3 entspricht der nach Fig. 2 wobei das Tragelement 12 aus einer einzelnen, durchgehenden Federschiene 42 besteht, an der die Wischleiste 24 befestigt beispielsweise angeklebt ist.

Beiden Ausführungen ist gemein, dass die Wischleiste 24 zusammen mit dem Tragelement 12 einen Grundkörper 56 definieren.

In beiden Ausführungsformen weist das Wischblatt 10 eine Windabweisleiste 44 auf, die über eine erste Kralle 46 und eine zweite Kralle 48 am Tragelement 12 befestigt ist. Die beiden Krallen 46, 48 umgreifen die Randstreifen 38 des Tragelements 12 und sind miteinander über einen Steg 50 verbunden. Auf der der Wischleiste 24 gegenüberliegenden Seite des Tragelements 12 setzen sich die Krallen 46, 48 bzw. der Steg 50 fort und definieren eine Windanströmseite 52 sowie eine Windabströmseite 54.

Im ersten Ausführungsbeispiel nach Fig. 2 besteht der Steg 50 zum Teil aus dem Material der Krallen 46, 48 und zum Teil aus dem Material des weiteren Aufbaus der Windabweisleiste 44. Da die Krallen 46, 48 einen sicheren Halt am Tragelement 12 gewährleisten müssen, ist deren Material härter als das der restlichen Windabweisleiste 44. Im zweiten Ausführungsbeispiel nach Fig. 3 besteht der Steg 50 aus dem Material der restlichen Windabweisleiste 44. In beiden Ausführungsbeispielen kann die Windabweisleiste 44 extrudiert werden.

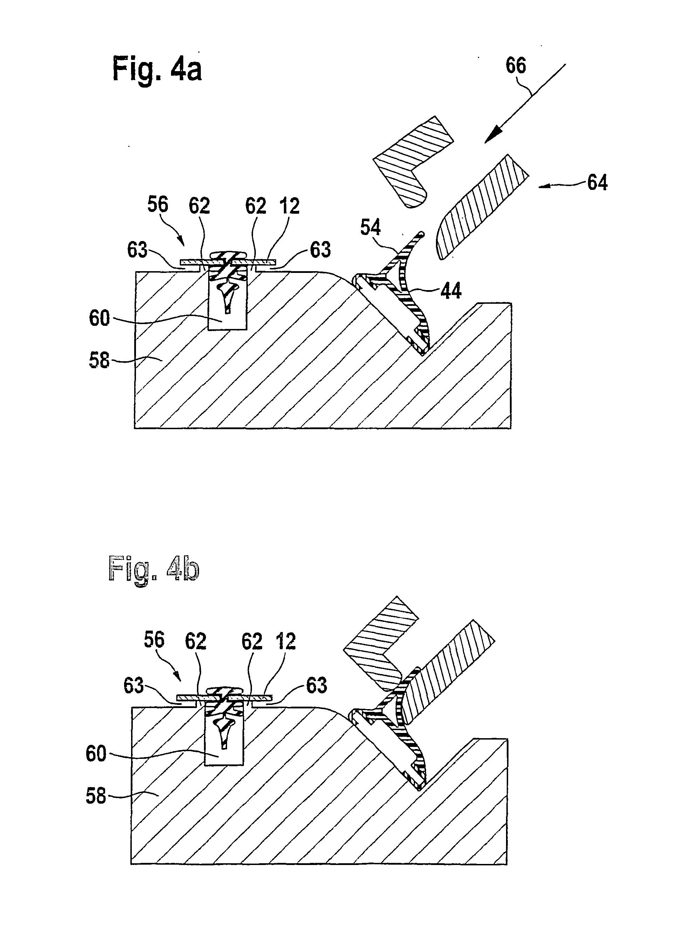

In einem erfindungsgemäßen ersten Verfahrensbeispiel nach den Figuren 4a bis 4g wird der Grundkörper 56 in eine Haltevorrichtung 58 eingelegt, die eine entsprechende Aussparung 60 für die Wischleiste 24 sowie zwei Auflagen 62 aufweist, auf denen das Tragelement 12 zu liegen kommt. Die Auflagen 62 sind schmäler gehalten als die Breite des Tragelements 12, sodass zwischen dem Tragelement 12 und der Haltevorrichtung 58 zumindest bereichsweise ein Abstand 63 verbleibt.

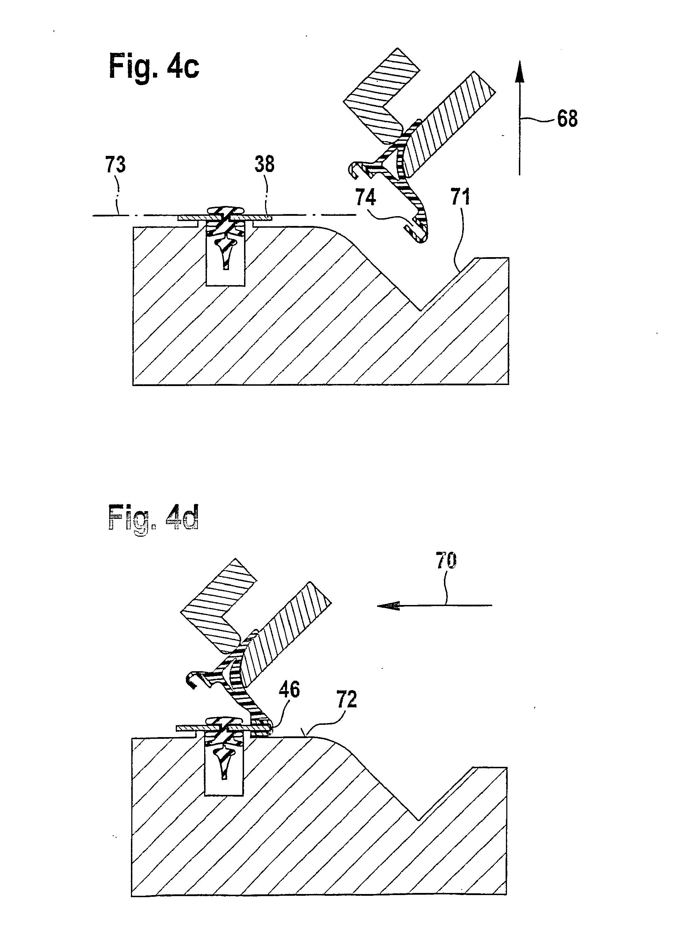

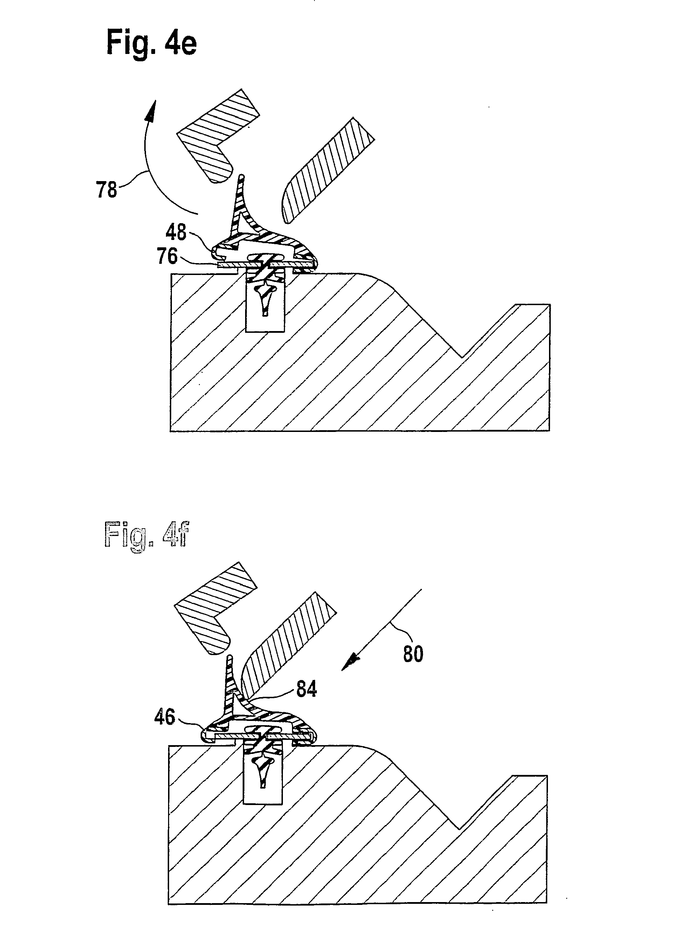

Mit einem Greifer 64 wird die Windabweisleiste 44, die in der Nähe des Grundkörpers 56 abgelegt ist, gegriffen (Fig. 4b), auf der ersten Seite 65 des Grundkörpers 56 zu bewegt, die erste Kralle 46 am Tragelement 12 eingefädelt (Fig. 4d) und dann über das Tragelement 12 gestülpt (Fig. 4f).

In detaillierten Einzelschritten ist in Fig. 4a zu erkennen, dass der Greifer 64 entlang einer durch die Windabströmseite 54 definierten Richtung auf die Windabweisleiste 44 zubewegt wird (Pfeil 66) und entsprechend Fig. 4b die Windabweisleiste 44 greift. Um eine Beschädigung der Windabweisleiste 44 zu vermeiden bzw. die Windabweisleiste 44 über eine größere Fläche zu halten, weist der an der Windanströmseite 52 angreifende Teil des Greifers 64 die Form der Windanströmseite 52 auf.

Der Greifer 64 hebt dann die Windabweisleiste 44 an (Pfeil 68 in Fig. 4c) um sie anschließend auf den Grundkörper 56 zu zubewegen (Pfeil 70 in Fig. 4d). Die Windabweisleiste 44, die bereits geneigt in einer als Vertiefung 71 ausgebildeten Aufnahme der Haltevorrichtung 58 abgelegt ist, wird unter eben dieser Neigung während der Bewegung (Pfeil 70) gehalten. Die Neigung ist relativ zu einer durch das Tragelement 12 virtuell aufgespannten Ebene 73 (Fig. 4c). Der Höhenabstand der Windabweisleiste 44 zur Haltevorrichtung 58 ist so gewählt, dass die erste Kralle 46 an einer Fläche 72 zur Anlage gelangt, die in den Abstand 63 zwischen dem Tragelement 12 und der Haltevorrichtung 58 mündet. Durch die Bewegung in Richtung des Pfeils 70 richtet sich die erste Kralle so aus, dass deren Krallenöffnung 74 in Richtung des Randstreifens 38 weist. Durch die weiteren Bewegung in Richtung des Pfeils 70 wird dann die erste Kralle 46 zwangsweise in den Abstand 63 eingeführt und am Tragelement 12 eingefädelt.

Nachdem die Windabweisleiste quer über das Tragelement 12 geführt und die zweite Kralle 48 auf einer zweiten Seite 76, die der ersten Seite 65 gegenüberliegt, abgelegt wurde, öffnet sich der Greifer 64 (Pfeil 78 in Fig. 4e). Der eine Teil des Greifers 64 wird nun auf die Windabweisleiste zubewegt (Pfeil 80 in Fig. 4f) und fungiert als Klippsleiste 82, indem er auf einen Flügelbereich 84 der Windabweisleiste 44 drückt und so die zweite Kralle 46 um die zweite Seite 76 schiebt. Auf Grund der aufgebauten Spannung im Steg 50 fädelt auch die zweite Kralle 48 am Tragelement 12 ein in dem sie in den Abstand 63 einfährt. Der Greifer 64 kann entfernt werden, die Windabweisleiste 44 ist fertig montiert.

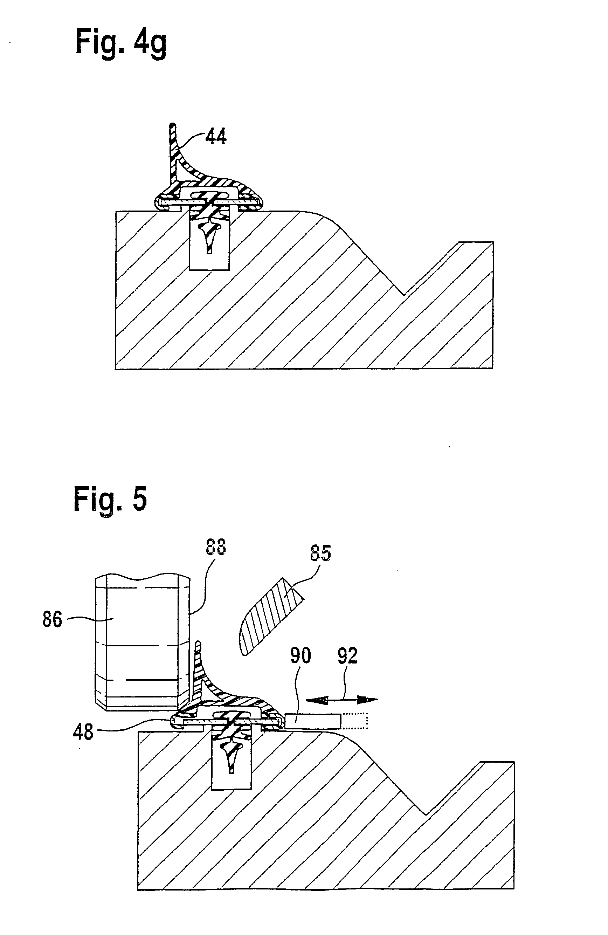

In einem zweiten Verfahrensbeispiel, das schematisch in Figur 5 dargestellt ist, erfolgen die Verfahrensschritte analog zum ersten Verfahrensbeispiel entsprechend den Figuren 4a bis 4e, das heißt, bis die Windabweisleiste 44 mit ihrer zweiten Kralle 48 auf der zweiten Seite 76 abgelegt wurde. Nach dem Öffnen des Greifers 64 wird mit einer Druckrolle 86 von oben auf die zweite Kralle 48 gedrückt, bis diese auf Grund ihrer Elastizität das Tragelement 12 umgreift und in den Abstand 63 eingeführt ist. Die Druckrolle 86 wird dann entlang der Windabweisleiste 44 geführt, wodurch die zweite Kralle 48 einer Wellenbewegung ähnlich zum Hintergreifen des Tragelements 12 gezwungen wird. Mit einer Seite 88 liegt die Druckrolle 86 der Windabströmseite 54 direkt gegenüber und kann damit als Führung beim Einfädeln der zweiten Kralle 48 dienen.

Zum ersten Einfädeln der zweiten Kralle 48 kann optional ein Klippsstempel 85 eingesetzt werden, der in einem schmalen Bereich auf die Windanströmseite 52 drückt. Nach diesem partiellen Einfädeln wird das weitere Einfädeln über die Druckrolle 86 vollzogen. Der Klippsstempel 85 kann dabei zurückgezogen werden oder zu Sicherungszwecken an der Windanströmseite 52 angelegt bleiben.

Als eine weitere Sicherungsmaßnahme kann, nachdem die erste Kralle 46 vollständig eingefädelt ist, eine Andrückleiste 90 auf die erste Kralle 46 zubewegt werden (Pfeil 92), bis sie an der ersten Kralle 46 anliegt und diese damit für die weiteren Montagevorgänge in ihrer Position sichert. Diese Maßnahme kann auch im ersten Verfahrensbeispiel eingesetzt werden.

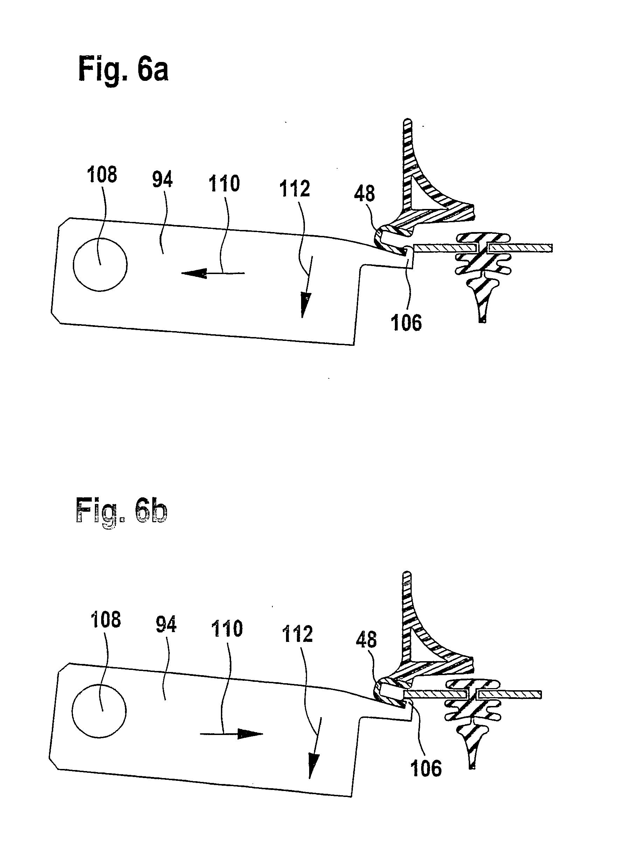

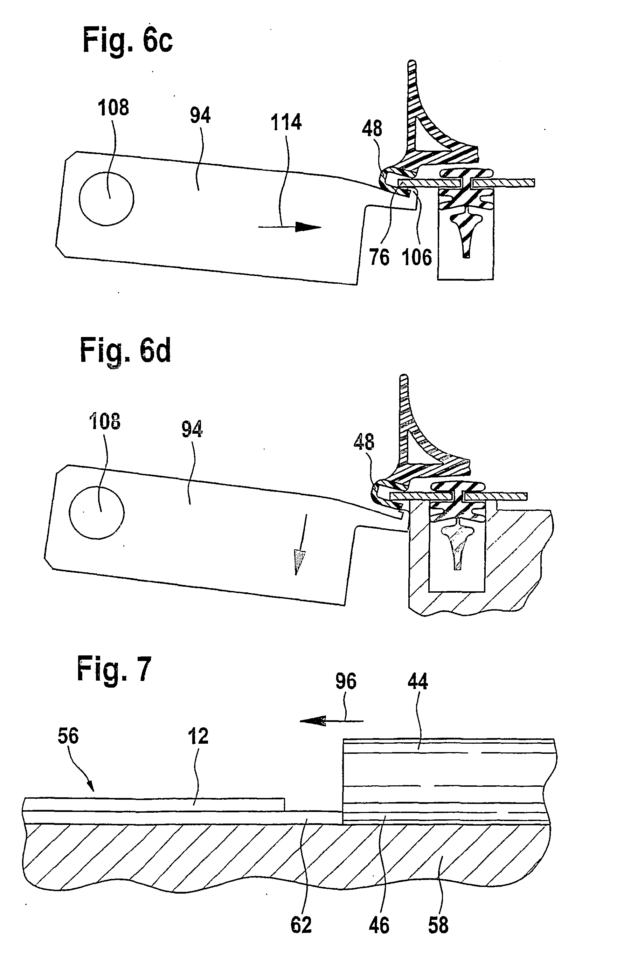

In einem dritten Verfahrensbeispiel, das schematisch in den Figuren 6a bis 6d dargestellt ist, erfolgen die Verfahrensschritte analog zum ersten Verfahrensbeispiel entsprechend den Figuren 4a bis 4e, das heißt, bis die Windabweisleiste 44 mit ihrer zweiten Kralle 48 auf der zweiten Seite 76 abgelegt wurde. Nach dem Öffnen des Greifers 64 wird die zweite Kralle 48 mit einer Hakenleiste 94 eine Verschiebe-Schwenkbewegung aus. Die Hakenleiste 94 erstreckt sich über die gesamte Länge der Windabweisleiste 44 und vollzieht damit das Einfädeln der zweiten Kralle 48 in einem Schritt. Es ist jedoch auch denkbar, dass die Hakenleiste 94 nur in einem kleinen Anfangsbereich durch die Verschiebe-Schwenkbewegung die zweite Kralle 48 einfädelt und das weitere Einfädeln durch ein Verfahren der Hakenleiste 94 entlang der Längserstreckung der Windabweisleiste 44 erfolgt. Auch in diesem Verfahrensbeispiel kann eine Andrückleiste 90 die erste Kralle 44 in ihrer Position sichern.

In einem vierten Verfahrensbeispiel, das schematisch in Figur 7 dargestellt ist, liegt die Windabweisleiste 44 in einer Längsflucht zum Grundkörper 56, der seinerseits wie in den vorangegangenen Beispielen in der Haltevorrichtung 56 gehalten wird. Mit einer nicht dargestellten Greifvorrichtung, die bevorzugt stirnseitig an der Windabweisleiste 44 angreift, werden die Krallen 46 und 48 am Tragelement 12 eingefädelt und danach die Windabweisleiste 44 in Richtung des Pfeils 96 die Windabweisleiste über das Tragelement 12 gestülpt.

Für dieses Verfahren eignet sich besonders ein Wischblatt analog zu Figur 3.

Wie in Figur 1 erkennbar ist, weist das Wischblatt 10 je zwei Windabweisleisten auf, die zu beiden Seiten der Anschlussvorrichtung 18 angeordnet sind. Allen vorbeschriebenen Verfahrensbeispielen ist gemeinsam, dass die beiden Windabweisleisten 44 gleichzeitig montiert werden. Es ist jedoch auch denkbar, die Montage nacheinander zu vollziehen.

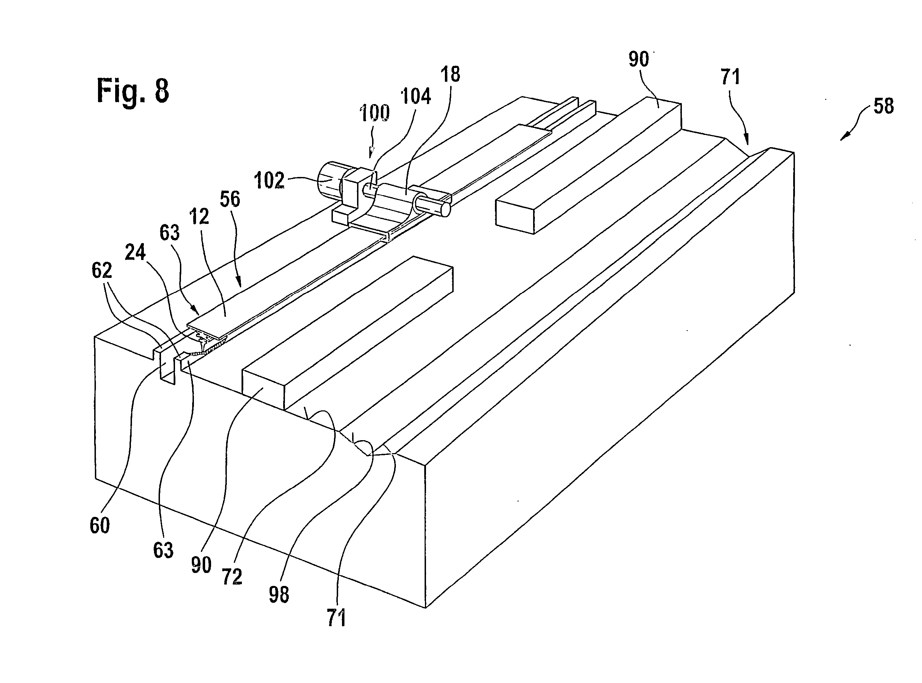

In Figur 8 ist eine erfindungsgemäße Vorrichtung dargestellt, mit der bzw. auf der die vorbeschriebenen Verfahrensbeispiele durchgeführt werden können. Sie weist eine Haltevorrichtung 58 auf mit einer als Aussparung 60 ausgebildeten Aufnahme für den Grundkörper 56 des Wischblatts 10. Die Aussparung 60 wird flankiert von zwei Auflagen 62, die zu einer oberen Fläche 72 einen Abstand 63 definieren. Wird ein Wischblatt 10 mit seinem Tragelement 12 auf den Auflagen 62 abgelegt, kommt damit das Tragelement 12 im Abstand 63 über der Fläche 72 zu liegen. Die erfindungsgemäße Vorrichtung weist ferner eine Greifvorrichtung auf, die in Figur 8 nicht dargestellt ist, deren Greifer 64 in den die Verfahrensbeispiele zeigenden Figuren 4 bis 6 erkennbar ist.

Dementsprechend weist der Greifer 64 mindestens zwei Greifglieder auf, wobei ein Greifglied als eine sich entlang des Tragelements 12 erstreckende Klippsleiste 82 ausgebildet ist (Figuren 4a bis 4f).

In einer anderen Ausführungsform ist ein Greifglied als Rolle insbesondere Druckrolle 86 ausgebildet.

Die Vorrichtung weist ferner eine Vertiefung 71 auf, in der die Windabweisleiste 44 ablegbar ist. Die Vertiefung 71 ist dabei mit mindestens einer schrägen Fläche 98 versehen, an der die Windabweisleiste 44 angelegt und damit schräg zum Grundkörper 56 positioniert werden kann. Anstatt einer Vertiefung kann auch ein eine schräge Fläche aufweisender Aufbau vorgesehen sein.

Um den Grundkörper 56 auf den Auflagen 62 zu sichern, ist eine Aufnahme 100 vorgesehen, die eine mit dem Grundkörper 56 des Wischblatts 10 verbundene Anschlussvorrichtung 18 aufnehmen und damit sichern kann. Die Aufnahme 100 weist einen Zylinder 102 auf, in dem ein nicht dargestellter Kolben verschiebbar und damit in eine Öffnung der Anschlussvorrichtung 18 einführbar ist. Die Anordnung ist so getroffen, dass ein von einer nicht dargestellten Positionierungseinrichtung eingeliefertes Wischblatt in gestreckter und damit vorgespannter Form auf den Auflagen 62 abgelegt und über die Kolbenstange 104 in dieser Position gesichert werden kann. Die Spannung des Tragelements 12 verhindert ein Abheben der Tragelementenden von denen Auflagen 62 während der Montage der Windabweisleiste 44. Ferner verhindert das Zusammenwirken zwischen der Wischleiste 24 und der Aussparung 60 ein seitliches Verschieben des Tragelements 12 während der Montage.

Selbstverständlich kann ein zu montierendes Wischblatt mit einer Achse im Bereich der Anschlussvorrichtung 18 versehen sein, die dann von einer entsprechenden Aufnahme 100 gesichert wird. Es ist auch klar, dass zum Zwecke der Anpassung auf unterschiedliche Wischblattgeometrien die Auflagen 62 in Höhe und Abstand sowie die Tiefe der Aussparung 60 manuell oder maschinell veränderbar sind. Zudem kann eine zusätzliche Haltewirkung erzeugt werden, wenn die Auflage 62 elektromagnetisch aktivierbar sind oder wenn in der Aussparung 60 ein Unterdruck erzeugt wird.

Die Vorrichtung weist ferner Anpressleisten 90 auf. Jeder der Anpressleisten 90 ist zwischen mindestens zwei Positionen quer zur Längserstreckung des Wischblatts 10 verschiebbar (siehe Figur 5). In einer ersten Position, in Figur 5 gestrichelt gezeichnet, ist der Grundkörper 56 sowie die Fläche 72 davor frei während in der zweiten Position die Anpressleiste an der zu montierenden Windabweisleiste 44 im Bereich des Tragelements 12 anliegt. Die Führungen sowie Verschiebemittel für jede Anpressleiste 90 sind nicht dargestellt.

Die erfindungsgemäße Vorrichtung weist in einer weiteren Ausführungsform eine Hakenleiste 94 auf, die beidseitig neben der Aufnahme 100 in Längserstreckung des zu montierenden Wischblatts 10 angeordnet sind. Die Hakenleiste 94 ist in den Figuren 6a bis 6d dargestellt. Sie besitzt einen Haken 106, der in Form und Größe an die zweite Kralle 48 angepasst ist. Die Hakenleiste 94 ist über eine Achse 108 schwenkbar gelagert, wobei die Achse 108 selbst quer zu ihrer axialen Erstreckung verschiebbar ausgebildet ist. Damit kann die Hakenleiste 94 die zweite Kralle 48 fassen, durch Verschieben der Achse 108 in Richtung des Pfeils 110 die Kralle 48 über den Rand des Tragelements 12 ziehen, durch Verschenken nach unten in Richtung des Pfeils 112 und nachgeordnetem Verschieben in Richtung des Pfeils 114 die Kralle 48 dann um die zweite Seite 76 herum positionieren. Damit ist die zweite Kralle 48 ebenfalls eingefädelt.

Selbstverständlich ist es auch möglich, ohne den Gedanken der Erfindung zu verlassen, die Windabweisleiste 44 in einer der Aussparung 60 ähnlichen Aussparung zu positionieren und das Tragelement 12 den entsprechenden Bewegungsablauf oder zumindest Teile davon ausführen zulassen. Es sind dazu dann Vorkehrungen zu treffen, die die Krümmung im unbelasteten Zustand des Tragelements 12 berücksichtigen. Die kann beispielsweise über Schienen oder Rollen entlang der Windabweisleiste 44 erfolgen.

## Patentansprüche

1. Verfahren zum Herstellen eines Wischblatts (10), das mindestens einen eine Wischleiste (24) und ein Tragelement (12) aufweisenden Grundkörper (56) und eine Windabweisleiste (24) aufweist, mit den Schritten:
- Positionieren des Grundkörpers (56) in einer Haltevorrichtung (58) so, dass zwischen Tragelement (12) und Haltvorrichtung (58) zumindest bereichsweise ein Abstand (63) verbleibt,
-- Greifen der Windabweisleiste (44)
-- Einfädeln mindestens einer an der Windabweisleiste (44) angeformten Kralle (46, 48) am Tragelement (12),
-- Überstülpen der Windabweisleiste (44) über das Tragelement (12).

2. Verfahren nach Anspruch 1, **dadurch gekennzeichnet, dass** die Wischleiste (24) seitlich an einer ersten Seite (65) des Tragelements (12) eingefädelt, über eine Quererstreckung des Grundkörpers (56) geführt und seitlich über eine, der ersten Seite (65) gegenüberliegende zweite Seite (76) gestülpt wird.

3. Verfahren nach einem der Ansprüche 1 oder 2, **dadurch gekennzeichnet, dass** das Tragelement (12) eine Ebene (73) definiert, entlang der die Windabweisleiste (44) auf die erste Seite (65) zugeführt wird, wobei die Windabweisleiste (44) selbst gegenüber der Ebene (73) geneigt ist.

4. Verfahren nach Anspruch 3, **dadurch gekennzeichnet, dass** die Kralle (46) an der Haltevorrichtung (58) ausgerichtet und in den Abstand (63) zwischen Haltevorrichtung (58) ausgerichtet und in den Abstand (63) zwischen Haltevorrichtung (58) und Tragelement (12) geführt eingeschoben wird.

5. Verfahren nach einem der vorhergehenden Ansprüche, **dadurch gekennzeichnet, dass** eine zweite Kralle (48) beim Überstülpen der Windabweisleiste (44) die zweite Seite (76) des Tragelements (12) hintergreift.

6. Verfahren nach Anspruch 5, **dadurch gekennzeichnet, dass** zum Überstülpen eine Klippsleiste (82) auf einen Flügelbereich (84) der Windabweisleiste (44) drückt und so die zweite Kralle (48) um die zweite Seite (76) geschoben wird.

7. Verfahren nach Anspruch 5, **dadurch gekennzeichnet, dass** zum Überstülpen eine Rolle (86) auf einen Bereich drückt, die zweite Kralle (48) über die zweite Seite (76) schiebt und entlang der zweiten Seite (76) verfährt.

8. Verfahren nach Anspruch 7, **dadurch gekennzeichnet, dass** die Rolle (86) zuerst als Führung dient, solange die erste Kralle (86) eingefädelt wird, und dann als Druckrolle.

9. Verfahren nach einem der Ansprüche 3 bis 8, **dadurch gekennzeichnet, dass** die Windabweisleiste (44) in einer Aufnahme (71) der Haltevorrichtung (58) zwischengelagert wird, in einer Neigung der Windabweisleiste (44) gegenüber der Ebene des Tragelements (12) entspricht.

10. Verfahren nach einem der Ansprüche 5 bis 9, **dadurch gekennzeichnet, dass** zum Überstülpen die zweite Kralle (48) gegriffen und über die zweite Seite (76) des Tragelements (12) geführt wird.

11. Verfahren nach Anspruch 10, **dadurch gekennzeichnet, dass** die zweite Kralle (48) mittels einer Hakenleiste (94) gegriffen wird.

12. Verfahren nach Anspruch 1, **dadurch gekennzeichnet, dass** die Wischleiste (24) an einer Stirnseite des Tragelements (12) angesetzt und entlang des Tragelements (12) gestülpt wird.

13. Verfahren nach einem der vorhergehenden Ansprüche, **dadurch gekennzeichnet, dass** die Windabweisleiste (44) zweiteilig ausgebildet ist und die beiden Teile gleichzeitig auf unterschiedlichen Bereichen des Tragelements (12) aufgebracht werden.

14. Vorrichtung zur Durchführung des Verfahrens nach einem der vorhergehenden Ansprüche, **gekennzeichnet, durch** eine Haltevorrichtung (58) mit einer Aufnahme (60) für den Grundkörper (56) des Wischblatts (10), die mindestens einen Absatz aufweist, der zumindest bereichsweise einen Abstand (63) des Tragelements (12) des Wischblatts (10) zur Haltevorrichtung (56) gewährleistet und **durch** eine Greifvorrichtung (64), die die Windabweisleiste (44) greifen und über das Tragelement (12) stülpen kann.

15. Vorrichtung nach Anspruch 14, **dadurch gekennzeichnet, dass** der Greifer (64) mindestens zwei Greifglieder aufweist, wobei mindestens ein Greifglied als eine sich entlang des Tragelements (12) erstreckende Klippsleiste ausgebildet ist.

16. Vorrichtung nach Anspruch 14, **dadurch gekennzeichnet, dass** der Greifer (64) mindestens zwei Greifglieder aufweist, wobei mindestens ein Greifglied als eine Rolle (86) ausgebildet ist.

17. Vorrichtung nach einem der Ansprüche 14 bis 16, **dadurch gekennzeichnet, dass** eine Aufnahme (71) ausgebildet ist, in der die Windabweisleiste (24) unter einem Winkel ablegbar ist.

18. Vorrichtung nach einem der Ansprüche 14 bis 17, **dadurch gekennzeichnet, dass** eine Aufnahme (100) das Wischblatt (10) an einer am Wischblatt (10) ausgebildeten Anschlussvorrichtung (18) für einen Wischerarm (20) sichert.

19. Vorrichtung nach einem der Ansprüche 14 bis 18, **gekennzeichnet durch** eine Andrückleiste (90), die zwischen mindestens zwei Positionen quer zu einer Längserstreckung des Wischblatts (10) verschiebbar ist und in mindestens einer der Positionen die erste das Tragelement (12) umgreifende Kralle (46) der Windabweisleiste (44) in ihrer Position sichert.

20. Vorrichtung nach einem der Ansprüche 14 bis 19, **gekennzeichnet, durch** eine Hakenleiste (94), mit der die zweite Kralle (48) der Windabweisleiste (44) gegriffen und über das Tragelement (12) führbar ist.

21. Vorrichtung nach Anspruch 20, **dadurch gekennzeichnet, dass** die Hakenleiste (94) um eine Achse (108) verschwenkbar und quer zur Achse (108) verschiebbar ist.

## Claims

1. Method for producing a wiper blade (10) which has at least one basic body (56) having a wiper strip (24) and a supporting element (12), and a wind-deflecting strip (44), with the following steps:
- positioning the basic body (56) in a holding device (58) such that a spacing (63) remains at least in regions between the supporting element (12) and holding device (58),
- gripping the wind-deflecting strip (44),
- inserting at least one claw (46, 48), which is integrally formed on the wind-deflecting strip (44), on the supporting element (12),
- pulling the wind-deflecting strip (44) over the supporting element (12).

2. Method according to Claim 1, **characterized in that** the wiper strip (24) is inserted laterally on a first side (65) of the supporting element (12), is guided over a transverse extent of the basic body (56) and is pulled laterally over a second side (76) facing the first side (65).

3. Method according to either of Claims 1 and 2, **characterized in that** the supporting element (12) defines a plane (73) along which the wind-deflecting strip (44) is fed onto the first side (65), the wind-deflecting strip (44) itself being inclined in relation to the plane (73).

4. Method according to Claim 3, **characterized in that** the claw (46) is aligned on the holding device (58) and is aligned with the spacing (63) between the holding device (58) and supporting element (12) and is pushed in a guided manner into the spacing (63) between the holding device (58) and supporting element (12).

5. Method according to one of the preceding claims, **characterized in that**, when the wind-deflecting strip (44) is pulled over, a second claw (48) engages behind the second side (76) of the supporting element (12).

6. Method according to Claim 5, **characterized in that**, for the pulling-over operation, a clip strip (82) presses onto a wing region (84) of the wind-deflecting strip (44) and the second claw (48) is thus pushed around the second side (76).

7. Method according to Claim 5, **characterized in that**, for the pulling-over operation, a roller (86) presses onto a region, pushes the second claw (48) over the second side (76) and moves along the second side (76).

8. Method according to Claim 7, **characterized in that** the roller (86) first of all serves as a guide for as long as the first claw (86) is being inserted, and then as a pressure roller.

9. Method according to one of Claims 3 to 8, **characterized in that** the wind-deflecting strip (44) is temporarily stored in a receptacle (71) in the holding device (58), said receptacle corresponding to an inclination of the wind-deflecting strip (44) in relation to the plane of the supporting element (12).

10. Method according to one of Claims 5 to 9, **characterized in that**, for the pulling-over operation, the second claw (48) is gripped and guided over the second side (76) of the supporting element (12).

11. Method according to Claim 10, **characterized in that** the second claw (48) is gripped by means of a hook strip (94).

12. Method according to Claim 1, **characterized in that** the wiper strip (24) is fitted on an end side of the supporting element (12) and pulled along the supporting element (12).

13. Method according to one of preceding claims, **characterized in that** the wind-deflecting strip (44) is of two-part design and the two parts are attached simultaneously to different regions of the supporting element (12).

14. Device for carrying out the method according to one of the preceding claims, **characterized by** a holding device (58) with a receptacle (60) for the basic body (56) of the wiper blade (10), the holding device having at least one step which ensures a spacing (63) of the supporting element (12) of the wiper blade (10) from the holding device (56) at least in regions, and by a gripping device (64) which can grip the wind-deflecting strip (44) and pull the same over the supporting element (12).

15. Device according to Claim 14, **characterized in that** the gripper (64) has at least two gripping members, at least one gripping member being designed as a clip strip extending along the supporting element (12).

16. Device according to Claim 14, **characterized in that** the gripper (64) has at least two gripping members, at least one gripping member being designed as a roller (86).

17. Device according to one of Claims 14 to 16, **characterized in that** a receptacle (71) in which the wind-deflecting strip (24) can be deposited at an angle is formed.

18. Device according to one of Claims 14 to 17, **characterized in that** a receptacle (100) secures the wiper blade (10) on a connecting device (18), which is formed on the wiper blade (10), for a wiper arm (20).

19. Device according to one of Claims 14 to 18, **characterized by** a press-on strip (90) which is displaceable transversely with respect to a longitudinal extent of the wiper blade (10) between at least two positions and, in at least one of the positions, secures the position of the first claw (46) of the wind-deflecting strip (44), said claw engaging around the supporting element (12).

20. Device according to one of Claims 14 to 19, **characterized by** a hook strip (94) with which the second claw (48) of the wind-deflecting strip (44) is gripped and can be guided over the supporting element (12).

21. Device according to Claim 20, **characterized in that** the hook strip (94) is pivotable about an axis (108) and is displaceable transversely with respect to the axis (108).

## Revendications

1. Procédé pour fabriquer un balai d'essuie-glace (10) qui présente au moins un corps de base (56) présentant une raclette de balai d'essuie-glace (24) et un élément de support (12), et une baguette de déflexion d'air (44), comprenant les étapes consistant à :
- positionner le corps de base (56) dans un dispositif de retenue (58), de sorte qu'entre l'élément de support (12) et le dispositif de retenue (58) subsiste au moins en partie un espacement (63),
- saisir la baguette de déflexion d'air (44),
- enfiler au moins une griffe (46, 48) façonnée sur la baguette de déflexion d'air (44) sur l'élément de support (12),
- placer la baguette de déflexion d'air (44) par-dessus l'élément de support (12).

2. Procédé selon la revendication 1, **caractérisé en ce que** la raclette de balai d'essuie-glace (24) est enfilée latéralement d'un premier côté (65) de l'élément de support (12), est guidée sur une étendue transversale du corps de base (56) et est placée latéralement par-dessus un deuxième côté (76) opposé au premier côté (65).

3. Procédé selon l'une quelconque des revendications 1 ou 2, **caractérisé en ce que** l'élément de support (12) définit un plan (73) le long duquel la baguette de déflexion d'air (44) est acheminée au premier côté (65), la baguette de déflexion d'air (44) étant elle-même inclinée par rapport au plan (73).

4. Procédé selon la revendication 3, **caractérisé en ce que** la griffe (46) est enfoncée de manière orientée sur le dispositif de retenue (58), et de manière orientée dans l'espacement (63) entre le dispositif de retenue (58) et l'élément de support (12).

5. Procédé selon l'une quelconque des revendications précédentes, **caractérisé en ce qu'**une deuxième griffe (48) vient en prise avec le deuxième côté (76) de l'élément de support (12) lors de sa mise en place par-dessus la baguette de déflexion d'air (44).

6. Procédé selon la revendication 5, **caractérisé en ce que** pour la mise en place par le dessus, une baguette enclipsable (82) appuie sur une région d'aile (84) de la baguette de déflexion d'air (44) et de ce fait la deuxième griffe (48) est déplacée autour du deuxième côté (76).

7. Procédé selon la revendication 5, **caractérisé en ce que** pour la mise en place par le dessus, un rouleau (86) appuie sur une région qui pousse la deuxième griffe (48) par-dessus le deuxième côté (76) et la déplace le long du deuxième côté (76).

8. Procédé selon la revendication 7, **caractérisé en ce que** le rouleau (86) sert d'abord de guide, tant que la première griffe (86) est enfilée, puis sert de rouleau de pression.

9. Procédé selon l'une quelconque des revendications 3 à 8, **caractérisé en ce que** la baguette de déflexion d'air (44) est intercalée dans un logement (71) du dispositif de retenue (58), suivant une inclinaison de la baguette de déflexion d'air (44) par rapport au plan de l'élément de support (12).

10. Procédé selon l'une quelconque des revendications 5 à 9, **caractérisé en ce que** pour la mise en place par le dessus, la deuxième griffe (48) est saisie et guidée par-dessus le deuxième côté (76) de l'élément de support (12).

11. Procédé selon la revendication 10, **caractérisé en ce que** la deuxième griffe (48) est saisie au moyen d'une baguette d'accrochage (94).

12. Procédé selon la revendication 1, **caractérisé en ce que** la raclette de balai d'essuie-glace (24) s'applique contre un côté frontal de l'élément de support (12) et est placée le long de l'élément de support (12).

13. Procédé selon l'une quelconque des revendications précédentes, **caractérisé en ce que** la baguette de déflexion d'air (44) est réalisée en deux parties et les deux parties sont appliquées simultanément sur des régions différentes de l'élément de support (12).

14. Dispositif pour mettre en oeuvre le procédé selon l'une quelconque des revendications précédentes, **caractérisé par** un dispositif de retenue (58) avec un logement (60) pour le corps de base (56) du balai d'essuie-glace (10), qui présente au moins un épaulement qui garantit au moins en partie un espacement (63) de l'élément de support (12) du balai d'essuie-glace (10) au dispositif de retenue (56) et par un dispositif de préhension (64), qui peut venir en prise avec la baguette de déflexion d'air (44) et la placer par-dessus l'élément de support (12).

15. Dispositif selon la revendication 14, **caractérisé en ce que** le dispositif de préhension (64) présente au moins deux organes de préhension, au moins un organe de préhension étant réalisé sous forme de baguette enclipsable s'étendant le long de l'élément de support (12).

16. Dispositif selon la revendication 14, **caractérisé en ce que** le dispositif de préhension (64) présente au moins deux organes de préhension, au moins un organe de préhension étant réalisé sous forme de rouleau (86).

17. Dispositif selon l'une quelconque des revendications 14 à 16, **caractérisé en ce qu'**un logement (71) est réalisé, dans lequel la raclette de déflexion d'air (44) peut être placée suivant un certain angle.

18. Dispositif selon l'une quelconque des revendications 14 à 17, **caractérisé en ce qu'**un logement (100) fixe le balai d'essuie-glace (10) sur un dispositif de raccordement (18) pour un bras d'essuie-glace (20) réalisé sur le balai d'essuie-glace (10).

19. Dispositif selon l'une quelconque des revendications 14 à 18, **caractérisé par** une baguette de pression (90) qui peut être déplacée entre au moins deux positions transversalement à une étendue longitudinale du balai d'essuie-glace (10) et qui, dans au moins l'une des positions, fixe la première griffe (46) de la baguette de déflexion d'air (44) entourant l'élément de support (12) dans sa position.

20. Dispositif selon l'une quelconque des revendications 14 à 19, **caractérisé par** une baguette d'accrochage (94), avec laquelle la deuxième griffe (48) de la baguette de déflexion d'air (44) est saisie et qui peut être guidée par le biais de l'élément de support (12).

21. Dispositif selon la revendication 20, **caractérisé en ce que** la baguette d'accrochage (94) peut être pivotée autour d'un axe (108) et déplacée transversalement à l'axe (108).
